# EUROPÄISCHE PATENTSCHRIFT

(11) **EP 0 367 267 B1**
(45) Veröffentlichungstag und Bekanntmachung des Hinweises auf die Patenterteilung: **31.01.1996**
(21) Anmeldenummer: 89120307.7
(22) Anmeldetag: 02.11.1989
(51) Int. Cl.: G02B 21/00, H01P 5/103, G02B 6/10

(54) **Tastspitze für elektromagnetische Strahlung**
Scanning tip for electromagnetic radiation
Pointe the balayage pour faisceau electro-magnétique

(30) Priorität: 03.11.1988 DE 3837389
(43) Veröffentlichungstag der Anmeldung: 09.05.1990
(73) Patentinhaber: Max-Planck-Gesellschaft zur Förderung der Wissenschaften e.V., D-37073 Göttingen (DE)
(72) Erfinder: Keilmann, Fritz, Dr.-Dipl.-Phys., D-7000 Stuttgart 80 (DE)
(74) Vertreter: von Bezold, Dieter, Dr.

(56) Entgegenhaltungen:
- EP-A- 0 112 402
- DE-A- 3 127 693
- DE-A- 3 916 047
- US-A- 3 588 754
- US-A- 4 528 528
- OPTICS COMMUNICATIONS Band 69, Nrn. 3-4, 1. Januar 1989, Seiten 219-224, Amsterdam, NL; M. FEE et al.: "Scanning electromagnetic transmission line microscope with sub-wavelength resolution"
- APPLIED PHYSICS LETTERS Band 44, Nr. 7, 1. April 1984, Seiten 651-653; D.W. POHL et al.: "Optical stethoscopy: Image recording with resolution lamda/20"

## Beschreibung

Die vorliegende Erfindung geht aus von einer Tastspitze für sog. optische elektromagnetische Strahlung, wie sie aus der Veröffentlichung von Pohl et al. Appl. Phys. Lett., **44** (7), 1 April 1984, 651-653 bekannt ist.

Bei der Mikroskopie mit sichtbarem Licht liegt die minimale Ortsauflösung in der Größenordnung der Wellenlänge des verwendeten Lichts. Diese Grenze ist durch die Beugung gegeben. Wendet man das Prinzip des Licht-mikroskops auf Wellenlängen des Infrarot- bis Mikrowellenbereiches an, so ergibt sich wegen der im Vergleich zum sichtbaren Licht größeren Wellenlängen eine entsprechend geringere Ortsauflösung. Eine Auflösung von ca. 1 Mikrometer, wie man sie zur Untersuchung planarer Schaltkreise braucht, ist in diesem Falle nicht mehr zu erreichen. Andererseits ist eine mikroskopische Meßtechnik mit optischer Strahlung im Mikrowellen-bis Infrarotbereich, also im Wellenlängenbereich von etwa 1 Mikrometer bis etwa 3 cm, äußerst interessant, weil alle Materialien in diesem Bereich spezifische Resonanzgebiete aufweisen. Im Prinzip ist es daher möglich, für jeden Materialtypus bzw. -zustand eine Wellenlänge zu finden, die einen optimalen Beobachtungskontrast ergibt.

Es ist aus der oben genannten Veröffentlichung von Pohl et al. bekannt, eine zu untersuchende Struktur mittels einer optischen Tastspitze ("optisches Stethoskop") abzurastern, die eine wirksame Öffnung hat, welche wesentlich kleiner als die Wellenlänge der verwendeten Strahlung ist. Die Tastspitze besteht aus einem Quarzstab mit einem sich konisch verjüngenden spitzen Ende, dessen Krümmungsradius etwa 30 nm beträgt. Die Seitenwände des Quarzstabes sind mit einer Metallschicht überzogen. Durch Aufdrücken des spitzen Endes auf eine harte Fläche wird am spitzen Ende ein Loch mit einem Durchmesser, der klein im Vergleich zur Wellenlänge (488 nm) der verwendeten optischen Strahlung ist, gebildet. Der Quarzstab reflektiert das Licht an seinen Wänden und das vordere Ende der Metallschicht mit dem in sie gequetschten Loch stellt eine Art von Blende dar.

Aus einer Veröffentlichung von Ash et al., Nature, **237**, 30. Juni 1972, 510-512 ist es bekannt, Mikrowellenstrahlung mit einer Frequenz von etwa 10 GHz in einen Hohlraumresonator einzukoppeln, der in einer Wand ein Loch mit einem Durchmesser von 1,5 mm hat. Das zu untersuchende Objekt wird mit der aus diesem Loch austretenden Strahlung abgerastert, wobei eine Ortsauflösung von etwa 1/60 der Wellenlänge erreicht werden kann. Nachteilig an diesem "Resonanzverfahren" ist, daß der Hohlraumresonator sehr schmalbandig ist und praktisch nur für eine ganz bestimmte Wellenlänge verwendet werden kann.

Nachteilig an der erstgenannten Anordnung, die mit einem sich verjüngenden Quarzstab-Lichtleiter arbeitet, ist es, daß ein Großteil der Strahlung reflektiert wird und deshalb nicht zu der aus der Öffnung austretenden Nutzstrahlung beiträgt.

Aus der DE-A-3 127 693 ist ein Übergangselement zwischen einem Hohlleiter und einer Mikrostreifenleitung bekannt. Das Über-gangselement besteht aus einem kurzen Koaxialleitungsab-schnitt, der in einen Endabschnitt des Hohlleiters eingesetzt ist und ausgangsseitig mit der Mikrostreifenleitung verbunden ist, wobei der Innenleiter der Koaxialleitung ein Stück weit in den Hohlleiter hineinragt und dort als Antenne wirkt.

Die vorliegende Erfindung löst die Aufgabe, eine gattungsgemäße Tastspitze so weiterzubilden, daß die Übertragung der Strahlung zwischen einem Bereich großen Querschnitts, der eine im wesentlichen ungehinderte Ausbreitung der Strahlung zuläßt, und einer im Vergleich zur Wellenlänge der Strahlung kleinen Endöffnung verbessert wird, durch die kennzeichnenden Merkmale des Patentanspruchs 1.

Vorteilhafte Weiterbildungen und Ausgestaltungen der Erfindung sind Gegenstand von Unteransprüchen.

Dadurch, daß sich von der Endöffnung aus ein Stab mit elektrisch leitender Oberfläche, die bezüglich der Wandungen des Hohlleiterabschnitts isoliert ist, in den Hohlleiterabschnitt bis zu einer Stelle hinein erstreckt, bei der der Querschnitt noch eine im wesentlichen ungehinderte Ausbreitung der Strahlung ermöglicht, wird dieser Bereich zu einer Art von Koaxialleitung, längs der wegen der nun geänderten Feldverteilung auch relativ langwellige Strahlung ausbreitungsfähig ist.

Bei der erfindungsgemäßen Tastspitze ist der Übertragungs-wirkungsgrad in Richtung von dem Bereich großen Querschnitts zur kleinen Endöffnung und umgekehrt wesentlich besser als bei der oben erwähnten bekannten

Tastspitze. Die erfindungsgemäße Tastspitze ist außerdem breitbandig und kann daher für ein ganzes Spektrum von Wellenlängen mit optimalem Wirkungsgrad benutzt werden. Das bevorzugte Verwendungsgebiet ist der Wellenlängenbereich unter etwa 3 cm, insbesondere der Mikrowellen- und Ferninfrarotbereich, ggf. auch der Bereich des nahen Infrarots und des sichtbaren Lichts und des Ultravioletts, solange Metalle als Strahlungsführungsmedium zu arbeiten vermögen.

Die vorliegende Tastspitze kann für die verschiedensten Zwecke verwendet werden, z. B. Raster-Mikroskopie sowie mikroskopische Spektroskopie, beides sowohl in Transmission als auch in Reflexion und Emission; ferner nichtlineare Spektroskopie, Stimulation, Anregung von Halbleiterelektronen, Strahlungsheizung, Kurzzeitspektroskopie, alles mit hoher Ortsauflösung.

Im folgenden werden bevorzugte Ausführungsbeispiele der Erfindung unter Bezugnahme auf die Zeichnungen näher erläutert. Es zeigen:
- Fig. 1: eine Querschnittsansicht einer Tastspitze, anhand derer das der Erfindung zugrundeliegende Problem erläutert wird, und
- Fig. 2: eine Querschnittsansicht einer bevorzugten Ausführungsform der Erfindung.

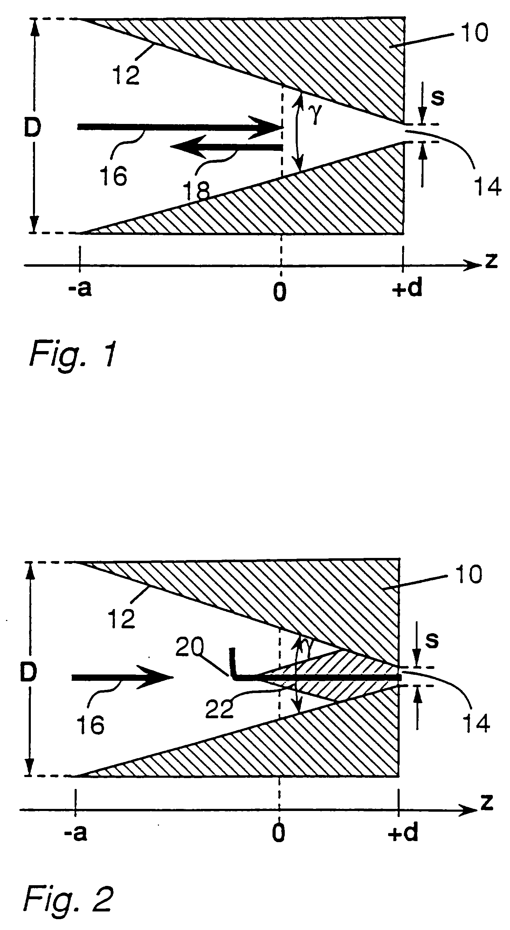

In Fig. 1 ist ein Wellenleiter in Form eines Hohlleiter-Abschnitts 10 dargestellt, der zumindest an seiner Innenwand 12 aus einem elektrisch möglichst gut leitenden Werkstoff, z. B. einem Metall, wie Aluminium oder Silber, besteht. Der Innenquerschnitt des Hohlleiterabschnitts 10 nimmt längs einer Axial- oder Strahlungsausbreitungsrichtung z von einer Stelle z = -a bis zu einer Endöffnung 14 bei z = +d stetig, vorzugsweise linear ab. Im Bereich z < 0 ist der Innen-Querschnitt groß genug, um eine im wesentlichen ungehinderte Ausbreitung der Strahlung in dem wie eine Hochfrequenzleitung arbeitenden Hohlleiterabschnitt zu gestatten.

Sich verjüngende metallische Hohlleiter sind auch schon für elektromagnetische Strahlung im Mikrowellen- und Ferninfrarotbereich bekannt.

Sie können zur Konzentrierung oder "Fokussierung" der Strahlung bis auf Abmessungen von etwa einer halben Wellenlänge benutzt werden. Die minimal möglichen Abmessungen des Innenquerschnitts des Hohlleiters sind durch die kritische Wellenlänge oder Grenzwellenlänge bestimmt. Bei quadratischem Querschnitt ist die minimal mögliche Seitenlänge des Hohlleiterquerschnitts, also auch einer Austrittsöffnung für die fokussierte Strahlung, gleich der halben Wellenlänge. Wird nämlich der Querschnitt kleiner, so gerät man in den Sperrbereich, die Welle ist in dem Bereich mit dem kleineren Querschnitt nicht mehr ausbreitungsfähig und wird daher an der kritischen Stelle total reflektiert. Die Reflexion der Strahlung tritt jedoch nicht abrupt an der kritischen Stelle des Hohlleiters ein, die mit z = 0 bezeichnet werden soll, wobei z die Axial- oder Strahlungsausbreitungsrichtung im Hohlleiter ist. Ein Teil der Strahlung leckt nämlich in den Sperrbereich z > 0 hinein. Ihre Intensität nimmt von z = 0 aus mit zunehmendem z überexponentiell ab. Der Effekt der Leckstrahlung kann ausgenutzt werden, wenn d so gewählt wird, daß am Ort der Öffnung 14 Leckstrahlungsleistung zur Verfügung steht.

Selbst wenn der Abstand d nur wenige Wellenlängen beträgt, ist bei der in Fig. 1 dargestellten Tastspitze die an der öffnung 14 verfügbare Strahlungsleistung wesentlich kleiner als die bei z = -a eingestrahlte Strahlungsleistung, da sich eben nur um Leckstrahlung handelt. Dieser Nachteil wird bei der Ausführungsform gemäß Fig. 2 vermieden. Die Ausführungsform gemäß Fig. 2 enthält einen Hohlleiterabschnitt 10 mit sich verjüngendem, kreisförmigem Innenquerschnitt. Zusätzlich ist hier jedoch noch ein koaxialer Stab 20 vorgesehen, der sich vom Zentrum der Öffnung (14) durch den Sperrbereich z > 0 bis in den Bereich z < 0 erstreckt, in dem eine ungehinderte Ausbreitung der Strahlung möglich ist. Der Stab 20 hat einen kreisförmigen Querschnitt sowie eine hochleitende Oberfläche und kann z. B. aus einem Metall, wie Silber oder Aluminium bestehen. Er ist elektrisch gegen die Innenwand 12 isoliert und durch einen z. B. doppelkegelförmigen Körper 22 aus einem verlustarmen Dielektrikum gehaltert. Als Dielektrikum eignet sich z. B. Polyethylen, das im Infrarot- und Mikrowellenbereich nur wenig absorbiert und einen nahezu konstanten Brechungsindex aufweist. Zur Halterung kann auch ein kurzer Stopfen in der Öffnung und/oder eine Scheibe im Hohlleiterabschnitt verwendet werden.

Der den Stab 20 enthaltende Bereich stellt eine Koaxialleitung dar, längs der wegen der nun andersartigen Feldverteilung auch langwellige Strahlung ausbreitungsfähig ist. Durch die Verwendung einer sich verjüngenden und zumindest im Sperrbereich koaxialen metallischen Hochfrequenzleitung ergibt sich eine fokussierende Tastspitze, die die eingestrahlte Leistung 16 im Prinzip verlustfrei zur Öffnung 14 überträgt.

In der Praxis ist es zweckmäßig, den Koaxialleitungsteil reflexionsfrei auszuführen. Dies läßt sich mit Mitteln erreichen, wie sie aus der Mikrowellentechnik bekannt sind. Insbesondere kann man einen Stab 20 verwenden, der sich in Richtung auf die Öffnung 14 hin derart konisch verjüngt (nicht dargestellt), daß das Verhältnis Innendurchmesser zu Außendurchmesser der Koaxialleitung längs z konstant ist. Wenn ein dielektrischer Halterungskörper 22 verwendet wird, der ein erhebliches Volumen im Hohlleiter einnimmt, ist das Dielektrikum in üblicher Weise zu berücksichtigen.

Der Stab 20 reicht zweckmäßigerweise ein Stück in den Bereich z < 0 hinein und wirkt dort als Antenne. Er kann dort in Richtung des elektrischen Feldes umgebogen sein. Wie für die Koaxialleitung läßt sich auch für die Antenne Breitbandigkeit erreichen.

Die Strahlung kann durch eine Linse in das weite Ende der Tastspitze fokussiert werden. Der optimale wert von d hängt etwas vom Verjüngungswinkel (Fig. 1) ab und kann für einen Verjüngungswinkel von 30 Grad etwa eine Wellenlänge und für einen Verjüngungswinkel von 10 Grad etwa 3 Wellenlängen betragen.

Koaxialleitungen sind bisher nicht für den Frequenzbereich oberhalb etwa 30 GHz benutzt worden, wohl wegen der hohen Verluste, die durch Absorption im Dielektrikum sowie auch durch Reflexion an Kabelsteckern entstehen. Bei der vorliegenden Tastspitze sind die Absorptionsverluste tragbar, weil die Leitungslänge unüblich kurz ist, nämlich von der Größenordnung weniger Wellenlängen.

Der heutige Stand der mikromechanischen Fertigung ermöglicht Spitzen mit s = 1 µm, damit kann man für Mikrowellen mit einer Wellenlänge von 1 cm eine Fokussierung auf 1/10000 der Wellenlänge erreichen.

Der Hohlleiter 10 kann auch einen rechteckigen, quadratischen oder elliptischen Querschnitt haben. Aus Herstellungsgründen wird der kreisförmige Querschnitt bevorzugt. Wenn hier von der Querschnittsabmessung des Hohlleiters gesprochen wird, z. B. der Abmessung D an der Stelle z = -a oder von der Abmessung s der Öffnung 14, so ist damit bei einem Hohlleiter mit kreisförmigem Querschnitt der Durchmesser gemeint und bei einem Hohlleiter mit nichtkreisförmigem Querschnitt die maximale Querschnittsabmessung. Der Stab hat vorzugsweise eine ähnliche Querschnittsform wie der Hohlleiter, nötig ist dies jedoch nicht.

Bei Verwendung des Hohlleiterabschnitts 10 zur Abtast-Mikroskopie (siehe die Veröffentlichung von Pohl, l.c.), sollte das zu untersuchende Objekt in einem Abstand vor der Öffnung 14 angeordnet werden, der nicht größer als etwa s/2 ist, um die optimale Auflösung (etwa gleich s) zu erreichen.

Bei einer Ausführungsform für Strahlung mit einer Wellenlänge von 500 µm war s = 5 µm. Der Hohlleiter und der Koaxialleitungsabschnitt waren kreissymmetrisch.

## Patentansprüche

1. Tastspitze für elektromagnetische Strahlung mit einem elektrischen Hohlleiter, dessen Innenquerschnitt sich von einer Stelle, an der er eine Größe hat, die eine ungehinderte Ausbreitung der Strahlung senkrecht zum Querschnitt zuläßt, zu einer Endöffnung (14) verringert, deren Abmessung (s) klein im Vergleich zur Wellenlänge der Strahlung ist, **dadurch gekennzeichnet**, daß die Querschnittsabmessung des Hohlleiters (10) an einem Ort (z = 0) zwischen der genannten Stelle und der der Endöffnung (14) einen der Grenzwellenlänge entsprechenden Wert annimmt, bei der eine Reflexion der in Richtung auf die Endöffnung (14) in den Hohlleiter (10) eingespeisten Strahlung eintritt, und daß die Endöffnung (14) in einem vorgegebenen Abstand (d) von dem genannten Ort angeordnet ist, und daß im Hohlleiter (10) ein Stab (20) angeordnet ist, der eine elektrisch leitfähige Oberfläche hat und sich von der Endöffnung (14) mindestens bis zu dem genannten Ort (z = 0) erstreckt.

2. Tastspitze nach Anspruch 1, **dadurch gekennzeichnet**, daß die Oberfläche des Stabes (20) bezüglich der elektrisch leitfähigen Innenwand (12) des Hohlleiterabschnittes elektrisch isoliert ist.

3. Tastspitze nach Anspruch 1 oder 2, **dadurch gekennzeichnet**, daß der Stab sich über den genannten Ort hinaus in den Bereich des Hohlleiters erstreckt, in dem der Querschnitt eine im wesentlichen ungehinderte Ausbreitung der Strahlung zuläßt.

4. Tastspitze nach Anspruch 1, 2 oder 3, **dadurch gekennzeichnet**, daß das über den genannten Ort hinausreichende Stück des Wellenleiters als Antenne ausgebildet ist.

5. Tastspitze nach einem der Ansprüche 1 bis 4, **dadurch gekennzeichnet**, daß der Stab (20) durch mindestens einen dielektrischen Körper (22) gehaltert ist.

6. Tastspitze nach einem der Ansprüche 1 bis 5, **dadurch gekennzeichnet**, daß der Querschnitt des Stabes (20) in Richtung auf die Öffnung (14) hin abnimmt.

7. Tastspitze nach einem der vorhergehenden Ansprüche, **dadurch gekennzeichnet**, daß der Stab in Richtung eines durch die Strahlung im Hohlleiter erzeugten elektrischen Feldes umgebogen ist.

8. Tastspitze nach einem der vorhergehenden Ansprüche, **dadurch gekennzeichnet**, daß der Hohlleiter einen kreisförmigen Querschnitt hat.

## Claims

1. A scanning probe for electromagnetic radiation, with an electrical waveguide, whose internal cross-section reduces from a location at which it is of a size allowing unimpeded propagation of the radiation perpendicular to the cross-section to an end opening (14), whose dimension (s) is small in comparison with the wavelength of the radiation, characterized in that the cross-sectional dimension of the waveguide (10) at a place (z = 0) between the said location and the end opening (14) assumes a value corresponding to the limiting wavelength at which reflection of the radiation fed in the direction of the end opening (14) in the waveguide (10) appears, and in that the end opening (14) is arranged at a predetermined distance (d) from the said place and in that a rod (20) is arranged in the waveguide (10) and has an electrically conductive surface and extends from the end opening (14) at least up to the said place (z = 0).

2. A scanning probe according to claim 1, characterized in that the surface of the rod (20) is electrically insulated relative to the electrically conductive inside wall (12) of the waveguide section.

3. A scanning probe according to claim 1 or 2, characterized in that the rod extends beyond the said place into the region of the waveguide in which the cross-section allows substantially unimpeded propagation of the radiation.

4. A scanning probe according to claim 1, 2 or 3, characterized in that the part of the rod extending beyond the said place is formed as an antenna.

5. A scanning probe according to any of claims 1 to 4, characterized in that the rod (20) is retained by at least one dielectric body (22).

6. A scanning probe according to any of claims 1 to 5, characterized in that the cross-section of the rod (20) reduces in the direction of the opening (14).

7. A scanning probe according to any of the preceding claims, characterized in that the rod is bent in the direction of an electric field created by the radiation in the waveguide.

8. A scanning probe according to any of the preceding claims, characterized in that the waveguide has a circular cross-section.

## Revendications

1. Pointe de balayage pour rayonnement électromagnétique avec un conducteur creux électrique, dont la section transversale intérieure se rétrécit à partir d'un point, auquel elle a une dimension, qui autorise un élargissement libre du rayonnement perpendiculairement à la section transversale, vers un orifice terminal (14), dont la dimension (s) est petite par rapport à la longueur d'onde du rayonnement, caractérisée en ce que la dimension de la section transversale du conducteur creux (10) en un lieu (z = 0) entre le point cité et celui de l'orifice terminal (14), prend une valeur correspondant à la longueur d'onde limite, pour laquelle a lieu une réflexion du rayonnement envoyé dans le conducteur creux (10), en direction de l'orifice terminal (14), et en ce que l'orifice terminal (14) est placé à une distance (d) donnée du lieu cité, et en ce que dans le conducteur creux (10) est placée une barre (20), qui a une surface électriquement conductrice et qui s'étend à partir de l'orifice terminal (14) au moins jusqu'au lieu cité (z = 0).

2. Pointe de balayage selon la revendication 1, caractérisée en ce que la surface de la barre (20) est électriquement isolée par rapport à la paroi intérieure (12 électriquement conductrice de la portion de conducteur creux.

3. Pointe de balayage selon la revendication 1 ou 2, caractérisée en ce que la barre s'étend au-delà de l'emplacement cité, dans la zone du conducteur creux, dans laquelle la section transversale autorise une propagation sensiblement libre du rayonnement.

4. Pointe de balayage selon la revendication 1, 2 ou 3, caractérisée en ce que la partie du guide d'ondes, s'étendant sur l'emplacement cité, est configurée en antenne.

5. Pointe de balayage selon l'une des revendications 1 à 4, caractérisée en ce que la barre (20) est maintenue par au moins un corps diélectrique (22).

6. Pointe de balayage selon l'une des revendications 1 à 5, caractérisée en ce que la section transversale de la barre (20) diminue en direction de l'orifice (14).

7. Pointe de balayage selon l'une des revendications précédentes, caractérisée en ce que la barre est repliée en direction d'un champ électrique produit par le rayonnement dans le conducteur creux.

8. Pointe de balayage selon l'une des revendications précédentes, caractérisée en ce que le conducteur creux présente une section transversale circulaire.
